# EUROPÄISCHE PATENTSCHRIFT

(11) **EP 0 541 166 B1**
(45) Veröffentlichungstag und Bekanntmachung des Hinweises auf die Patenterteilung: **28.06.1995**
(21) Anmeldenummer: 92203346.9
(22) Anmeldetag: 30.10.1992
(51) Int. Cl.: A47J 27/62, F24C 15/10

(54) **Anordnung zur Regelung der Heizleistung für einen Kochtopf**
Assembly to control the heat supply of a cooking vessel
Dispositif de contrôle de la puissance chauffant une casserole

(30) Priorität: 02.11.1991 DE 4136133
(43) Veröffentlichungstag der Anmeldung: 12.05.1993
(73) Patentinhaber: Philips Patentverwaltung GmbH, 22335 Hamburg (DE); Philips Electronics N.V., 5621 BA Eindhoven (NL)
(72) Erfinder: Kersten, Reinhard, c/o Philips Patentverwalt. GmbH, W-2000 Hamburg 1 (DE); Klinkenberg, Klaus, c/o Philips Patentverwalt.GmbH, W-2000 Hamburg 1 (DE); Sonnek, Martin, c/o Philips Patentverwalt. GmbH, W-2000 Hamburg 1 (DE)
(74) Vertreter: Erdmann, Anton, Dipl.-Ing.

(56) Entgegenhaltungen:
- DE-A- 2 911 433
- DE-A- 3 928 620
- DE-C- 3 811 925
- FR-A- 1 373 011
- US-A- 4 722 268
- PATENT ABSTRACTS OF JAPAN vol. 8, no. 224 (M-331)(1661) 13. Oktober 1984 & JP-A-59 107 138 (MATSUSHITA DENKI SANGYO K.K.)

## Beschreibung

Die Erfindung bezieht sich auf eine Anordnung zur Regelung der Heizleistung für einen von einer Kochplatte, z. B. einer Lichtkochplatte, beheizbaren Topf mit einer sensorgesteuerten Elektronik.

Durch die DE-A-4122430 (veröffentlicht am 07-01-93) der Anmelderin ist eine Anordnung vorgeschlagen worden, bei der ein als Meßstrecke dienendes Meßrohr vorgesehen, welches das Innere des Wasser enthaltenden Topfes mit der Außenluft verbindet. Dem Meßrohr ist ein Sensor (Dampfsensor) zugeordnet, der mit einer Regeleinrichtung zur Beeinflussung der Heizleistung verbunden ist. Durch eine automatisch geregelte Zufuhr von Heizenergie wird gerade soviel Wasser bei Atmosphärendruck verdampft, daß jegliche Restluft aus dem Topf nach außen verdrängt wird. Dabei bildet sich im Meßrohr zwischen dem aus dem Topf strömenden heißen Dampf und der von außen eindringenden kalten Luft eine Grenzschicht, die von dem Sensor erfaßt und durch Regelung der Heizleistung innerhalb des Meßbereiches des Sensors örtlich konstant gehalten wird. Die Ausbildung dieser Grenzschicht ist ein Zeichen dafür, daß der sogenannte Dampfpunkt erreicht ist, bei dem jegliche Restluft aus dem Topf verdrängt ist. Dieser Dampfpunkt wird durch die Regelung exakt gehalten. Dieser Sensor ermöglicht somit die exakte Regelung mit minimal notwendiger Energiezufuhr und minimalen Flüssigkeits-Verlusten.

Es sind ferner Kochvorrichtungen bekannt, welche die zugeführte Energie über einen Gut-Sensor steuern, wobei der Sensor direkt oder indirekt die Temperatur des Kochgutes erkennt und in Abhängigkeit einer gewählten Funktion über eine entsprechende Elektronik die zugeführte Energie regelt. Dabei kann der Sensor direkt in das Kochgut eingebracht, z.B. in eine Flüssigkeit eingetaucht oder als Bratenspieß ausgebildet sein. Ein indirektes Fühlen der Temperatur des Kochgutes erfolgt z.B. durch Abnahme der Temperatur am Boden des Kochgeschirrs oder durch Einbau des Sensors in das Kochgeschirr.

Bei beiden genannten Bauarten sind die Sensoren jeweils nur einem Verwendungszweck gut angepaßt. So ermöglicht z.B. die erstgenannte Bauart mit minimalem Aufwand ein Kochen der Lebensmittel in Wasser oder ein Garen in Dampf, jedoch kein Braten von Lebensmitteln. Dagegen ist bei der zweitgenannten Bauart, bei der eine direkte oder indirekte Abnahme der Temperatur an dem zu behandelnden Lebensmitteln selbst erfolgt, ein Braten möglich, jedoch ist der Kochpunkt von Flüssigkeiten nicht exakt zu erkennen, so daß diese Systeme immer mit etwas "Vorschub-Energie" fahren, was zu erhöhtem Verlust an Flüssigkeit und Energie führt.

Durch die DE-OS 39 28 620 ist ein Kochherd bekannt geworden, bei dem die Energiezufuhr wenigstens einer Kochstelle mikroprozessorgesteuert ist. Damit kann aus dem tatsächlichen Zustand des Kochgutes der weitere Programmablauf des Kochvorganges bestimmt werden. Bei einer Ausführungsform der bekannten Bauart ist ein Sensor, der die Temperatur des Topfbodens bestimmt, mit einem externen Fühler kombiniert, der die Temperatur des Kochgutes mißt. Diese Kombination ermöglicht den Ablauf eines Kochprogramms ohne Anbrennen oder Überkochen des Kochgutes.

Ferner ist durch die DE-OS 32 05 123 eine Einrichtung zum Garen von Nahrungsmitteln im Heizraum eines Mikrowellengerätes mit einem Sensor bekannt geworden, der im Strömungsweg der aus dem Heizraum abströmenden Luft angeordnet ist. Um ein völlig automatisches Garen oder Aufwärmen von Nahrungsmitteln im Heizraum des Mikrowellengerätes zu ermoglichen, ist ein weiterer Sensor im Zuluftweg zum Heizraum angeordnet. Zum Erfassen der Kerntemperatur des Nahrungsmittels ist eine Meßfühlereinrichtung vorgesehen. Zur automatischen Steuerung des Garvorgangaes bzw. Garablaufes ist schließlich ein programmierbarer Mikrocomputer angeordnet, dem die von den Sensoren und der Meßfühlereinrichtung ermittelten Daten zugeführt werden und der mehrere Grundprogramme zur Steuerung von Garprozessen für unterschiedliche Speisegruppen enthält.

Der Erfindung liegt die Aufgabe zugrunde, eine Anordnung der eingangs genannten Art vielfältiger verwendbar zu machen.

Diese Aufgabe wird gemäß der Erfindung dadurch gelöst,
a) daß dem Topf mindestens ein Sensor (Gut-Sensor) zur Erfassung der Temperatur der Nahrungsmittel zugeordnet ist,
b) daß der Topf mit der Außenluft nur über ein Meßrohr verbunden ist, in dem zur Erfassung des Dampfpunktes einer im Topf vorhandenen Flüssigkeit mindestens ein Sensor (Dampf-Sensor) angeordnet ist, und
c) daß alle Sensoren auf die Elektronik geschaltet sind und über die Elektronik miteinander kombinierbar sind.

Damit wird eine multifunktionale Anwendung der Anordnung der eingangs genannten Art ermöglicht, und zwar auf der Basis automatisierter oder teilautomatisierter Wärmebehandlungsprozesse. Diese Multifunktionalität der Anordnung wird durch die Kombination der beiden Sensoren, d.h. des Gut- und des Dampf-Sensors, ermöglicht. Dabei kann z.B. nur der Dampfsensor in Betrieb sein, wenn Lebensmittel z.B. nur in Wasser gekocht oder in Dampf gegart werden sollen. Andererseits kann auch nur der Gut-Sensor in Betrieb sein, wenn z.B. Lebensmittel nur gebraten werden sollen, wobei der Sensor z.B. als Bratenspieß ausgebildet sein kann. Schließlich können beide Sensoren auch in Kombination betrieben werden, wenn z. B. ein saftiger Braten zubereitet werden soll. Dieser wird zunächst scharf angebraten, wobei der Dampf-Sensor so lange in Betrieb ist, bis das im Topf vorhandene Wasser verdampft ist. Danach wird auf den z. B. als Bratenspieß im Braten steckenden Gut-Sensor umgeschaltet, wobei die Heizleistung z. B. auf ca. 40% ihres Anfangswertes gesenkt wird. Mit dieser Heizleistung wird dann so lange weitergefahren, bis die Temperatur im Innern des Bratens die gewünschte Höhe erreicht hat. Danach wird die Heizung abgestellt, da der Braten gar ist.

Der Gut-Sensor erkennt die Temperatur der in den Topf eingebrachten Lebensmittel und eignet sich daher z.B. zum Braten oder Garen über vorgewählte ϑ/t-Profile, vorzugsweise zur Regelung der Guttemperatur unter 100°C, z.B. Garen bei 80°C und Warmhalten bei 50°C. Ferner ist der Gut-Sensor in Funktion bei Temperaturen über 100°C, z. B. beim Fritieren in Öl von 190°C. Außerdem kann mit seiner Hilfe festgestellt werden, ob eine Mindestmenge an Kochgut oder Wasser beim Dampfkochen vorhanden ist.

Im Fall der Regelung des Kochpunktes (druckloses "Dampfen") erkennt der Dampf-Sensor in dem Meßrohr exakt das gewollte Austreten des Dampfes und regelt die zugeführte Energie sehr rasch soweit herab, daß kein weiterer Dampf austritt, daß jedoch der exakte Dampfpunkt weiter gehalten wird, wie dies in der o.g. älteren Anmeldung der Anmelderin näher erläutert ist. Dabei wird der nur über das Meßrohr mit der Außenluft verbundene Topf so lange erhitzt, bis die Luft aus dem Topf und mindestens einem anschließenden Teil des Meßrohres verdrängt ist. Dabei wird die im Meßrohr gebildete Grenzschicht zwischen Dampf und Luft von dem als Temperaturfühler ausgebildeten Dampf-Sensor erfaßt und durch eine vbm Sensor eingeleitete Regelung der Heizleistung innerhalb eines Meßbereiches des Sesors örtlich konstant gehalten. Dieser Sensor ermöglicht somit die exakte Regelung des Dampfpunktes mit minimal dazu notwendiger Energiezufuhr und minimalen Flüssigkeitsverlusten und eignet sich daher zum drucklosen Garen von Gemüse und Fleisch im Sieb und zum Kochen von Wasser, Tee, Suppen usw. mit optimalen Ergebnissen. Dieser Dampf-Sensor regelt somit die Leistungszufuhr für den Kochprozeß derart, daß durch eine Minimierung der Abdampfrate einschließlich einer Entlüftung der Energieverbrauch und die Geruchsbelastung minimiert werden.

In Ausgestaltung der Erfindung sind als Sensoren z.B. Temperaturelemente, Halbleiterelemente, Thermistoren oder Feuchtigkeitssensoren vorgesehen, welche mit ihrem Temperatursignal in Form elektrischer Ströme die Elektronik ansteuern. Dabei ist in weiterer Ausgestaltung der Erfindung der Elektronik vorzugsweise ein Mikroprozessor zugeordnet, wobei der Wärmebehandlungsprozeß der Lebensmittel über ein Eingabegerät nach einem vorgewählten Temperatur- und/oder Zeitprogramm (ϑ/t-Profil) frei programmierbar ist. Dadurch kann in Abhängigkeit des vorgewählten ϑ/t-Profils die Energiezufuhr auf einen für den gewählten Behandlungsprozeß optimalen Wert geregelt werden.

Der die Temperatur der Lebensmittel erfassende Gut-Sensor kann z.B. direkt in das Lebensmittel eingebracht werden. Dies bietet sich z.B. an bei flüssigen Lebensmitteln, bei denen der Sensor eingetaucht wird, oder bei einem Braten, wobei der Sensor als Bratspieß ausgebildet ist. Neben dieser direkten Temperaturmessung ist in weiterer Ausgestaltung eine indirekte Temperaturmessung möglich, wobei der Gut-Sensor am Topf selbst oder in dessen unmittelbarer Nähe angebracht sein kann. Dies hat den Vorteil, daß der Sensor nicht direkt mit dem Lebensmittel in Verbindung gebracht werden muß, aber den Nachteil einer nicht so genauen Messung.

In weiterer Ausgestaltung der Erfindung kann der Gut-Sensor, je nach Art des Lebensmittels, unterschiedlich ausgebildet und austauschbar angeordnet sein. Dadurch ist ein schneller und einfacher Wechsel der zu behandelnden Lebensmittel und des zugehorigen Sensors möglich.

In weiterer Ausgestaltung der Erfindung ist vorgesehen, daß der Dampfpunkt in dem Meßrohr gebildet wird von einer Grenzschicht zwischen dem aus dem Topf drängenden Dampf und der in das Meßrohr dringenden Luft, wobei der Dampfpunkt dann erreicht ist, wenn alle Luft aus dem Topf verdrängt ist und kein Dampf mehr aus dem Meßrohr austritt. Dieses Meßrohr kann z.B. als Handgriff ausgebildet und am Deckel des Topfes befestigt sein. Für den Fall, daß der Dampf-Sensor nicht in Betrieb ist, dient das Meßrohr als Ableitung für die aus dem Topf z.B. beim Braten austretenden Dämpfe.

In Ausgestaltung der Erfindung ist vorgesehen, daß der Gut-Sensor nach Einschalten der Energiezufuhr und nach Erreichen der für das Lebensmittel erforderlichen Behandlungstemperatur ein Signal an die Elektronik gibt, durch welches die für das eingebrachte Lebensmittel erforderliche Behandlungszeit eingestellt wird.

Für den Koch- und Garvorgang ist in Ausgestaltung der Erfindung vorgesehen, daß der Dampfsensor nach Einschalten der Energiezufuhr und Erreichen des Dampfpunktes ein Signal an die Elektronik gibt, durch welches die für die eingebrachten Lebensmittel erforderliche Behandlungszeit zum Kochen oder drucklosen Garen im Topf eingestellt wird.

In weiterer Ausgestaltung der Erfindung ist dem im Meßrohr nahe dem Innern des Topfes angebrachten Sensor ein weiterer Sensor in Richtung zum Außenende des Meßrohrs nachgeschaltet. Dieser zusätzliche Dampf-Sensor ermöglicht in Verbindung mit dem ersten Dampf-Sensor aufgrund charakteristischer Temperatur-Kurven das Erkennen von geringfügigen Störungen, wie kurzes Deckelöffnen ohne Nachbeschickung. Damit ist eine weitere Optimierung des automatisierten Kochprozesses möglich.

In der Zeichnung ist in den Fig. 1 bis 3 ein Ausführungsbeispiel des Gegenstandes gemäß der Erfindung schematisch dargesellt.
Fig. 1 zeigt ein Schaltbild der Anordnung zur Wärmebehandlung von Nahrungsmitteln,
Fig. 2 zeigt in einem Temperatur-Zeit-Diagramm den Verlauf der Temperatur bei einer Wärmebehandung zweier Arten von Lebensmitteln und
Fig. 3 zeigt das zugehörige Leistungs-Zeitdiagramm.

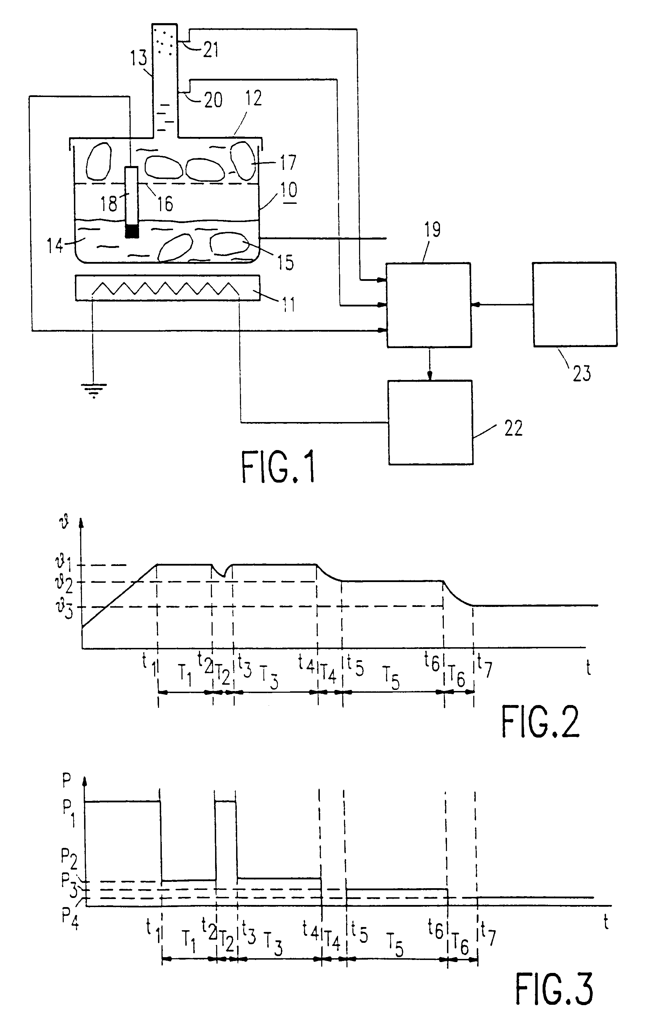

Die Anordnung gemäß Fig. 1 enthält einen Topf 10, der über eine Heizeinrichtung 11 mit Energie versorgt werden kann und über einen Deckel 12 verschlossen ist. Der Deckel 12 enthält ein Meßrohr 13, über welches das Innere des Topfes 10 mit der Außenluft in Verbindung steht. Der Topf 10 enthält Wasser 14, in dem Lebensmittel 15 gekocht werden sollen. Oberhalb der Wasserfläche befindet sich ein Sieb 16, auf dem weitere Lebensmittel 17 in Dampf gegart werden sollen. Die Temperatur des Wassers 14 und der Lebensmittel 15 wird über einen ersten Sensor 18 (Gut-Sensor) gemessen, der auf eine Elektronik 19 mit einem Mikroprozessor geschaltet ist. Im Meßrohr 13 befindet sich nahe dem Innern des Topfes 10 ein zweiter Sensor 20 (Dampf-Sensor) und nahe dem Außenende ein weiterer Dampf-Sensor 21, die beide ebenfalls auf die Elektronik 19 geschaltet sind. Mit 22 ist eine Leistungs-Steuer-Einheit bezeichnet zur Regelung der dem Topf 10 über die Heizeinrichtung 11 zugeführten Heizleistung. Mit einer Programmwahlvorrichtung 23 kann der Elektronik 19 ein vorgewähltes Temperatur-Zeit-Profil (ϑ/t-Profil) eingegeben werden.

Es ist möglich, die Anordnung nur mit dem Gut-Sensor 18 zu fahren. Dabei wird dann das beim Erwärmen entstehende Dampf-Luftgemisch aus dem Meßrohr 13 austreten. Je nach Güte der Regelung tritt dabei mehr oder weniger viel Dampf aus.

Wenn die Dampf-Sensoren 20 und 21 eingeschaltet sind, erfolgt eine Regelung der Heizleistung so, daß kein Dampf aus dem Meßrohr 13 austritt, wie dies in der o.g. älteren Anmeldung P 41 22 430.2 (PHD 91-097) erläutert ist.

Fig. 2 zeigt als Beispiel ein Diagramm, bei dem zunächst Karotten 15 im Wasser 14 bis zur Temperatur ϑ1 von 100° erhitzt werden. Dieser Zustand ist bei t1 erreicht. Bis dahin wurde die Anheizleistung P1 vorgegeben (Fig. 3). Bei Erreichen von t1 setzt die Dampfregelung über den Dampf-Sensor 20 ein. Dadurch wird die Heizeinrichtung durch Regelung des Dampfpunktes in dem Meßrohr 13 derart beeinflußt, daß die Temperatur ϑ1 für einen Zeitabschnitt T1 gehalten wird. Dazu ist eine Fortkochleistung P2 erforderlich. Nach Ablauf der Zeit T1 ertönt bei t2 ein akustisches Signal, der Deckel 12 wird geöffnet, und es werden Kartoffeln 17 zum Garen auf das Sieb 16 eingebracht. Kurzzeitig ist somit für den Zeitabschnitt T2 eine Leistung P1 erforderlich . Bei t3 hat sich der Vorgang wieder eingeregelt und es erfolgt gleichzeitig sowohl ein Kochen der Karotten 15 im Wasser 14 als auch ein Dämpfen der Kartoffel 17 auf dem Sieb 16. Dieser gleichzeitige Vorgang läuft bis t4, die Regelung auf die Temperatur ϑ1 erfolgt wiederum dabei mit Hilfe des Dampf-Sensors 20 durch Regeln des Dampfpunktes innerhalb des Meßrohres 13. Das Temperatur-Zeit-Profil zum Kochen der Karotten 15 über die Zeit T1 + T2 + T3 und zum Garen der Kartoffel 17 über die Zeit T3 wurde z.B. vorher über die Programmwahlvorrichtung 23 in die Elektronik 19 eingegeben und läuft somit automatisch ab.

Nach Erreichen von t4 fällt die Temperatur im Kochtopf, d.h. im Wasser 14, auf den Wert ϑ2 von z.B. 80° ab. Diese Regelung erfolgt mit Hilfe des Gut-Sensors 18. Für den Zeitabschnitt T4 + T5 erfolgt ein sogenanntes Nachgaren bis zum Erreichen des Zeitpunktes t6. Danach fällt die Temperatur nach einer Übergangszeit T6 auf den Wert ϑ3 ab, der einem Warmhalten der Speisen innerhalb des Topfes 10 entspricht. Auch diese Regelung erfolgt mit Hilfe des Gut-Sensors 18. Die jeweiligen Leistungswerte sind in Fig. 3 mit P1 bis P4 angegeben.

## Patentansprüche

1. Anordnung zur Regelung der Heizleistung für einen von einer Kochplatte (11), z. B. einer Lichtkochplatte, beheizbaren Topf (10) mit einer sensorgesteuerten Elektronik (19), dadurch gekennzeichnet,
a) daß dem Topf (10) mindestens ein Sensor (18) (Gut-Sensor) zur Erfassung der Temperatur der Nahrungsmittel (14, 15) zugeordnet ist,
b) daß der Topf (10) mit der Außenluft nur uber ein Meßrohr (13) verbunden ist, in dem zur Erfassung des Dampfpunktes einer im Topf vorhandenen Flüssigkeit (14) mindestens ein Sensor (10) (Dampf-Sensor) angeordnet ist, und
c) daß alle Sensoren (18, 20, 21) auf die Elektronik (19) geschaltet sind und über die Elektronik miteinander kombinierbar sind.

2. Anordnung nach Anspruch 1, dadurch gekennzeichnet, daß als Sensoren Temperaturelemente, Halbleiterelemente, Thermistoren, Feuchtigkeitssensoren o.dgl. vorgesehen sind, welche Sensoren mit ihrem ϑ-Signal in Form elektrischer Ströme die Elektronik (19) ansteuern.

3. Anordnung nach Anspruch 1 oder 2, dadurch gekennzeichnet, daß der Elektronik (19) ein Mikroprozessor zugeordnet ist und daß der Wärmebehandlungsprozeß der Lebensmittel (14, 15, 17) über ein Eingabegerät (23) nach einem vorgewählten Temperatur- und/oder Zeitprogramm (ϑ/t-Profil) frei programmierbar ist.

4. Anordnung nach einem der Ansprüche 1 bis 3, dadurch gekennzeichnet, daß der die Temperatur der Lebensmittel (14, 15) erfassende Gut-Sensor (18) direkt in das Lebensmittel eingebracht oder am Topf (10) selbst oder in dessen unmittelbarer Nähe angebracht ist.

5. Anordnung nach Anspruch 4, dadurch gekennzeichnet, daß der Gut-Sensor (18) je nach Art des Lebensmittels unterschiedlich ausgebildet und austauschbar angeordnet ist.

6. Anordnung nach einem der Ansprüche 1 bis 3, dadurch gekennzeichnet, daß der Dampfpunkt in dem Meßrohr (13) gebildet wird von einer Grenzschicht zwischen dem aus dem Topf (10) drängenden heißen Dampf und der in das Meßrohr (13) drängenden kalten Luft, wobei der Dampfpunkt dann erreicht ist, wenn jegliche Luft aus dem Topf (10) verdrängt ist und kein Dampf mehr aus dem Meßrohr (13) austritt.

7. Anordnung nach einem der Ansprüche 1 bis 6, dadurch gekennzeichnet, daß der Gut-Sensor (18) nach Einschalten der Energiezufuhr und nach Erreichen der für das eingebrachte Lebensmittel (14, 15) erforderlichen Behandlungstemperatur ein Signal an die Elektronik (19) gibt, durch welches die für das eingebrachte Lebensmittel erforderliche Behandlungszeit eingestellt wird.

8. Anordnung nach einem der Ansprüche 1 bis 6, dadurch gekennzeichnet, daß der Dampf-Sensor (20) nach Einschalten der Energiezufuhr und nach Erreichen des Dampfpunktes ein Signal an die Elektronik (19) gibt, durch welches eine für die eingebrachten Lebensmittel (14, 15, 17) erforderliche Behandlungszelt (T1 - T3) zum Kochen oder drucklosen Garen eingestellt wird.

9. Anordnung nach einem der Ansprüche 1 bis 9, dadurch gekennzeichnet, daß dem im Meßrohr (13) nahe dem Innern des Topfes (10) angebrachten Dampf-Sensor (20) ein weiterer Dampf-Sensor (21) in Richtung zum Ende des Meßrohres (13) nachgeschaltet ist.

## Claims

1. An arrangement for controlling the heating power for a vessel (10) which can be heated by a cook-top (11), for example a light cook-top, by means of a sensor-controlled electronic device (19), characterised in that
a) at least one (cooking-substance) sensor (18) is associated with the vessel (10) to detect the temperature of the foodstuffs (14, 15),
b) the vessel (10) only communicates with the ambient air *via* a measurement tube (13) in which a (steam) sensor (20) is arranged to detect the steam point of a liquid (14) present in the vessel, and
c) all the sensors (18, 20, 21) are connected to the electronic device (19) and can be combined with one another *via* the electronic device.

2. An arrangement as claimed in Claim 1, characterised in that temperature elements, semiconductor elements, thermistors, moisture sensors or the like are used as sensors, which sensors control the electronic device (19) with their ϑ signals in the form of electric currents.

3. An arrangement as claimed in Claim 1 or 2, characterised in that a microprocessor is associated with the electronic device (19) and the heat-treatment process of the foodstuffs (14, 15, 17) can be programmed freely *via* an entry means (23) in accordance with a preselected temperature and/or time program (ϑ/t profile).

4. An arrangement as claimed in any one of the Claims 1 to 3, characterised in that the cooking-substance sensor (18) which detects the temperature of the foodstuffs (14, 15) is introduced directly into the foodstuffs or is arranged on the vessel (10) itself or in the direct proximity thereof.

5. An arrangement as claimed in Claim 4, characterised in that the cooking-substance sensor (18) is of a different construction depending on the nature of the foodstuffs and is arranged to be exchangeable.

6. An arrangement as claimed in any one of the Claims 1 to 3, characterised in that the steam point in the measurement tube (13) is defined by an interface between the hot steam expelled from the vessel (10) and the cold air penetrating the measurement tube (13), the steam point being reached when all the air has been expelled from the vessel (10) and no more steam emerges from the measurement tube (13).

7. An arrangement as claimed in any one of the Claims 1 to 6, characterised in that after the energy supply has been switched on and after the appropriate processing temperature for the introduced foodstuffs has been reached the cooking-substance sensor (18) supplies a signal to the electronic device (19) to set the appropriate processing time for the introduced foodstuffs.

8. An arrangement as claimed in any one of the Claims 1 to 6, characterised in that after the energy supply has been turned on and after the steam point has been reached the steam sensor (20) supplies a signal to the electronic device (19) to set the appropriate processing time (T1 - T3) for boiling or non-pressurised cooking of the introduced foodstuffs (14, 15, 17).

9. An arrangement as claimed in any one of the Claims 1 to 9, characterised in that viewed in a direction towards the distal end of the measurement tube (13) a further steam sensor (21) is arranged behind the steam sensor (20) arranged in the measurement tube (13) near the interior of the vessel (10).

## Revendications

1. Dispositif de régulation de la puissance de chauffage destinée à une casserole (10) pouvant être chauffée à l'aide d'une plaque chauffante (11), par exemple une plaque chauffante légère, à l'aide d'une électronique (19) commandée par capteurs, caractérisé en ce que
a) la casserole (10) comprend au moins un capteur (18) (capteur des aliments) pour la mesure de la température des aliments (14, 15),
b) la casserole (10) n'est en liaison avec l'air extérieur que par l'intermédiaire d'un tube de mesure (13), dans lequel au moins un capteur (20) (capteur de vapeur) est disposé pour la mesure de la température d'ébullition d'un liquide (14) présent dans la casserole, et
c) tous les capteurs (18, 20, 21) sont raccordés à l'électronique (19) et peuvent être combinés entre eux par l'intermédiaire de l'électronique.

2. Dispositif suivant la revendication 1, caractérisé en ce qu'on emploie comme capteurs des éléments thermiques, des éléments semi-conducteurs, des thermistors, des capteurs d'humidité ou similaires, lesquels capteurs commandent l'électronique (19) avec leur signal ϑ sous forme de courants électriques.

3. Dispositif suivant la revendication 1 ou 2, caractérisé en ce que l'électronique (19) comprend un microprocesseur et en ce que le traitement thermique des aliments (14, 15, 17) est librement programmable suivant un programme prédéfini de température et/ou de temps (profil ϑ/t) par l'intermédiaire d'un appareil d'introduction (23).

4. Dispositif suivant l'une quelconque des revendications 1 à 3, caractérisé en ce que le capteur des aliments (18) mesurant la température des aliments (14, 15) est introduit directement dans les aliments ou fixé à la casserole même (10) ou à proximité immédiate de celle-ci.

5. Dispositif suivant la revendication 4, caractérisé en ce que le capteur des aliments (18) est construit différemment suivant le type d'aliments et est interchangeable.

6. Dispositif suivant l'une quelconque des revendications 1 à 3, caractérisé en ce que le point d'ébullition dans le tube de mesure (13) est formé par une couche limite entre la vapeur chaude sortant de la casserole (10) et l'air froid entrant dans le tube de mesure (13), le point d'ébullition étant atteint lorsque tout l'air contenu dans la casserole (10) a été chassé et qu'aucune vapeur ne sort plus du tube de mesure (13).

7. Dispositif suivant l'une quelconque des revendications 1 à 6, caractérisé en ce que le capteur des aliments (18) donne un signal à l'électronique (19) après enclenchement de l'apport d'énergie et lorsque la température de traitement nécessaire pour les aliments introduits (14, 15) a été atteinte, grâce auquel on règle le temps de cuisson des aliments introduits.

8. Dispositif suivant l'une quelconque des revendications 1 à 6, caractérisé en ce que le capteur de vapeur (20) donne un signal à l'électronique (19) après enclenchement de l'apport d'énergie et lorsque la température d'ébullition est atteinte, grâce auquel on règle le temps de traitement thermique nécessaire (T1-T3) pour l'ébullition ou la cuisson sans pression des aliments introduits (14, 15, 17) dans la casserole.

9. Dispositif suivant l'une quelconque des revendications 1 à 8, caractérisé en ce qu'un second capteur de vapeur (21) est placé derrière le capteur de vapeur (20) placé dans le tube de mesure (13) près de l'intérieur de la casserole (10), en direction de l'extrémité du tube de mesure (13).
